# FASCICULE DE BREVET EUROPEEN

(11) **EP 3 528 464 B1**
(45) Date de publication et mention de la délivrance du brevet: **14.07.2021**
(21) Numéro de dépôt: 19158151.1
(22) Date de dépôt: 19.02.2019
(51) Int. Cl.: H04L 29/06, H04L 9/32

(54) **PROCÉDÉ D'APPAIRAGE DE TERMINAUX ÉLECTRONIQUES, DISPOSITIFS D'APPAIRAGE, TERMINAUX ET PROGRAMME CORRESPONDANT**
VERFAHREN ZUM KOPPELN VON ELEKTRONISCHEN TERMINALS, KOPPELVORRICHTUNGEN, TERMINALS UND ENTSPRECHENDES PROGRAMM
METHOD OF PAIRING OF ELECTRONIC TERMINALS, PAIRING DEVICES AND CORRESPONDING PROGRAM.

(30) Priorité: 19.02.2018 FR 1851415
(43) Date de publication de la demande: 21.08.2019
(73) Titulaire: Ingenico Inc., Boston, MA 02110 (US)
(72) Inventeur: ROTSAERT, Christopher, 59290 Wasquehal (FR)
(74) Mandataire: Vidon Brevets & Stratégie

(56) Documents cités:
- EP-A1- 2 584 797
- WO-A1-2011/127627
- WO-A2-2009/105115
- US-A1- 2010 128 632
- US-A1- 2012 238 205
- US-A1- 2017 256 970
- Bluetooth Core Specifications XP055499587

## Description

### 1. Domaine

L'invention se rapporte au domaine de l'authentification. L'invention se rapporte plus particulièrement à l'authentification matérielle de dispositifs entre eux. Plus particulièrement, l'invention se rapporte à l'authentification de deux dispositifs entre eux.

### 2. État de la technique

Il est bien connu de l'état de la technique de nombreux protocoles qui permettent à deux dispositifs de s'authentifier préalablement à la transmission ou à l'échange d'informations confidentielles. Tel est par exemple le cas d'un terminal de communication sans fil qui souhaite s'authentifier sur un réseau local d'un utilisateur, par exemple un réseau sans fil wifi. Pour ce faire, préalablement à tout échange de donnée, le terminal doit s'authentifier sur le réseau de communication. Cette authentification passe généralement par une phase de saisie d'une clé, qui est par exemple une clé WEP (de l'anglais pour « Wired Equivalent Privacy », une clé WPA (« Wi-Fi Protected Access ») PSK (« pre-shared key ») ou autre. Un des problèmes avec ce type de clé est la longueur de celle-ci. Une clé WEP comprend 13 caractères, tandis qu'une clé WPA-PSK est normalement une phrase secrète qui peut être longue à saisir.

D'autres domaines nécessitent une authentification entre des dispositifs sans fils. Il en va ainsi par exemple des dispositifs qui communiquent par l'intermédiaire de la technologie Bluetooth®. Bluetooth est une technologie sans fil pour créer des réseaux personnels sans fils fonctionnant dans la bande de fréquence de 2.4 GHz ne nécessitant pas d'autorisation, avec une portée d'environ une dizaine de mètres. Les réseaux sont généralement composés de périphériques nomades comme les téléphones portables, les assistants personnels et les ordinateurs portables. Par défaut, une communication Bluetooth n'est pas authentifiée, et n'importe quel périphérique peut échanger des données avec n'importe quel autre périphérique.

Un périphérique Bluetooth (par exemple un téléphone portable) peut choisir de demander une authentification pour fournir un service particulier. L'authentification Bluetooth est généralement effectuée avec des *codes PIN.* Un code PIN Bluetooth est une chaîne ASCII d'une longueur maximum de 16 caractères. Par défaut, L'utilisateur doit entrer le même code PIN sur les deux périphériques. Une fois que l'utilisateur a entré le code PIN, les deux périphériques génèrent une *clé de liaison* (link key). Ensuite cette clé de liaison peut être enregistrée soit dans les périphériques eux-mêmes ou sur un moyen de stockage externe. Lors de l'échange suivant, les deux périphériques utiliseront la clé de liaison précédemment générée. Cette procédure est appelée *couplage.* Lorsque la clé de liaison est perdue par un des périphériques alors l'opération de couplage doit être répétée pour qu'une nouvelle clé puisse être générée.

Lorsque les données qui doivent être échangées entre les deux terminaux Bluetooth sont des données sensibles (comme des données bancaires par exemple), les échanges qui suivent la phase de couplage sont chiffrés, par exemple à l'aide de l'algorithme E0. E0 est l'algorithme de chiffrement à flot utilisé pour protéger la confidentialité des données échangées dans Bluetooth.

Le problème cependant est le même que pour la clé WEP ou la clé WPA : Il est nécessaire préalablement à tout échange chiffré, que l'utilisateur saisisse sur le terminal, un code PIN dont la longueur varie de 4 à 16 caractères, sachant que pour les applications les plus sécurisées, le code PIN à 16 caractères est préféré.

Que ce soit pour la technologie WiFi ou pour la technologie Bluetooth, la saisie d'un code PIN ou d'une clé d'une longueur excessive entraine au moins deux de problèmes à savoir un risque d'erreur lors de la saisie qui est important (particulièrement vrai lorsque la saisie s'effectue en caractère masqué (les caractères saisis ne sont pas affichés, mais à la place c'est une suite de caractères étoile qui est affichée) et que le code à saisir est long) ; en second lieu, lors de la saisie étant manuelle, rien n'assure qu'une personne malintentionnée n'espionne pas la saisie dans le but de s'approprier le code PIN ou la clé pour un usage frauduleux..

Des solutions de sécurisation ont été proposées, principalement pour la mise en œuvre d'une connexion Wi-Fi. Elles consistent en l'activation quasi simultanée des deux dispositifs à connecter ensemble. L'une de ces solutions est nommée « Wi-Fi Protected Setup (WPS) » et est un standard de réseau local sans fil simple et sécurisé. Cette solution ne règle cependant pas tous les problèmes, puisque l'une des variantes de WPS suppose la saisie d'un code PIN.

Dans le cas de la technologie Bluetooth, très différente par rapport au Wifi (à commencer par les bandes de fréquence utilisées et par la portée de la liaison), les solutions qui ont été proposées sont appelées OOB (de l'anglais pour « Out Of Band »). Ces solutions consistent à transmettre tout ou partie des données d'appairage par le biais d'un autre canal que le canal Bluetooth, et ce afin de disposer, de part et d'autre, des données confidentielles nécessaires à l'établissement d'une cana sécurisé en Bluetooth.

A nouveau, ces solutions posent problème, particulièrement quand les deux dispositifs sont interchangés de manière fréquente, comme c'est par exemple le cas d'un terminal de communication de type téléphone intelligent (ou smartphone) et un terminal de paiement. Typiquement, un terminal de paiement et un smartphone ne présentent pas les mêmes modes de fonctionnement et les mêmes capacités de batterie. Dans de plus en plus de commerces (chez des commerçants), ces deux types de terminaux sont couplés, par exemple comme c'est le cas avec la solution proposée dans le document de brevet WO2012076573. Le terminal de communication et le terminal de paiement sont assemblés et communiquent entre eux, par exemple via une liaison Bluetooth, pour échanger des données relatives aux paiement ou aux transactions, Or très concrètement, au cours d'une journée de vente, les utilisateurs (vendeurs) sont fréquemment amenés à interchanger les dispositifs, par exemple à cause de problème de batterie. L'un ou l'autre des deux terminaux doit faire l'objet d'un rechargement : le terminal déchargé est alors remplacé par un terminal chargé. Cela oblige à opérer un nouvel appairage, qui peut nécessiter des manipulations complémentaires, comme par exemple des désapairages (de l'anglais « unpairing », le fait de couper la liaison Bluetooth) du terminal que l'utilisateur vient de mettre à charger au profit d'un terminal de remplacement. Ces manipulations complémentaires sont complexes à mettre en œuvre et font perdre du temps aux utilisateurs.

En d'autres termes, il est nécessaire de fournir une solution de connexion qui soit à la fois simple et discrète afin d'une part d'éviter les erreurs de saisie et d'autre part d'assurer la confidentialité des données nécessaires à la connexion ou à l'appairage et permette d'interchanger des terminaux de manière simple.

### 3. Résumé

La technique divulguée a été créée en conservant ces inconvénients de l'art antérieur à l'esprit. L'invention se rapporte à procédé d'appairage d'un premier terminal, dit terminal initiateur désirant transmettre et recevoir des données avec un deuxième terminal, dit terminal accepteur.

Selon l'invention, un tel procédé comprend :
- une étape d'apposition d'un connecteur surfacique externe du terminal initiateur sur un connecteur surfacique externe complémentaire du terminal accepteur délivrant, audit terminal initiateur, une donnée de présence dudit terminal accepteur;
- une étape de détermination, par ledit terminal initiateur, d'un paramètre de connexion ;
- une étape d'appairage dudit terminal initiateur avec ledit terminal accepteur selon un mode d'appairage dépendant du paramètre de connexion déterminé.

Ainsi, il est possible de connecter simplement deux terminaux dot on souhaite effectuer un appairage.

Selon une caractéristique particulière, le mode d'appairage appartient au groupe comprenant :
- un mode de connexion physique permanent, dans lequel la connexion est exclusivement assurée par le connecteur surfacique externe du terminal initiateur connecté au connecteur surfacique externe complémentaire du terminal accepteur;
- un mode de connexion physique temporaire, dans lequel seul l'appairage du terminal initiateur avec le terminal accepteur requiert une connexion entre le connecteur surfacique externe du terminal initiateur et le connecteur surfacique externe complémentaire du terminal accepteur.

Ainsi, en étant connecté physiquement, et donc en détenant la preuve de la présence des deux terminaux l'un avec l'autre, il est possible de mettre en place, de façon sécurisé, deux modes de connexion des deux terminaux. Avantageusement, le mode de connexion temporaire peut être un mode par défaut, auquel cas, le mode de connexion permanent peut ne pas être disponible.

Selon un mode de réalisation particulier, dans le mode de connexion physique temporaire, l'étape d'appairage comprend :
- une étape de génération d'un code d'appairage par le terminal accepteur ;
- une épate de transmission, sous la forme d'une première donnée, par l'intermédiaire de la connexion entre les connecteurs surfacique, dudit code d'appairage ;
- une étape de réception de la première donnée par ledit terminal initiateur ;
- une étape de finalisation de l'appairage à l'aide de la première donnée reçue, par le biais d'une interface de communication sans fil.

Selon un mode de réalisation particulier, l'interface de communication sans fil est une interface Bluetooth.

Ainsi, il est possible de réaliser un appairage Bluetooth sécurisé dans lequel la présence des deux terminaux est confirmée (par le fait qu'ils sont physiquement connectés) tout en assurant une connexion simple et réponde (pas besoin de cable de connexion entre les deux terminaux) et donc uen facilité de connexion pour l'utilisateur.

Selon un mode de réalisation particulier, postérieurement à l'étape de réception de la première donnée par le terminal initiateur, le procédé comprend une étape de suppression, au d'une liste de terminaux accepteurs précédemment appariés audit terminal initiateur.

Ainsi il est possible de sécuriser encore plus le procédé de connexion en modifiant la liste des terminaux déjà connectés (tant du côté du terminal initiateur que du côté du terminal accepteur) et donc de supprimer les anciennes connexions déjà établies afin par exemple d'empêcher une nouvelle connexion à distance (qui serait parasitaire de la connexion en cours).

Selon un mode de réalisation particulier, l'étape d'apposition du connecteur surfacique externe du terminal initiateur sur le connecteur surfacique externe complémentaire du terminal accepteur créée une connexion de type USB entre le terminal initiateur et le terminal accepteur.

Ainsi, il est aisé de disposer d'une interface de communication rapide qui permette un échange de donnée efficace entre les deux terminaux, et ce sans nécessité d'utiliser des câbles de connexion.

Selon un mode de réalisation particulier, ledit terminal initiateur est un smartphone et en ce que ledit terminal accepteur est un terminal de paiement.

L'invention se rapporte également à un terminal initiateur du type comprenant un processeur de traitement et une mémoire. Selon l'invention un tel terminal comprend :
- un connecteur surfacique externe apte à être apposé sur un connecteur surfacique externe complémentaire d'un terminal accepteur ;
- des moyens de détermination d'un paramètre de connexion audit terminal accepteur;
- des moyens d'appairage avec ledit terminal accepteur selon un mode d'appairage dépendant du paramètre de connexion déterminé.

L'invention se rapporte également à un terminal accepteur du type comprenant un processeur de traitement et une mémoire. Selon l'inveniton, un tel terminal comprend :
- un connecteur surfacique externe apte à être apposé sur un connecteur surfacique externe complémentaire d'un terminal initiateur ;
- des moyens d'appairage avec ledit terminal initiateur selon un mode d'appairage dépendant d'un paramètre de connexion déterminé par ledit terminal initiateur.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Les caractéristiques précédemment décrites sont bien entendu combinables entre elles, sans sortier du cadre de l'invention.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 décrit le principe général de la méthode d'appairage ;
- la figure 2 décrit les étapes d'appairage d'un premier terminal initiateur avec un terminal accepteur ;
- la figure 3 symbolise un terminal accepteur selon l'invention ;
- la figure 4 symbolise un terminal initiateur selon l'invention ;
- les figures 5A, 5B et C décrivent physiquement l'appairage d'un terminal de paiement et d'un terminal de communication à l'aide de deux boitiers.

### 5. Description d'un mode de réalisation

### 5.1. Rappel du principe

Comme préalablement explicité, l'invention offre une nouvelle méthode de saisie de code d'appairage (par exemple un code PIN) pour l'appairage de deux dispositifs. L'invention s'applique notamment à la technologie d'appairage Bluetooth, mais il est également possible de l'appliquer à d'autres protocoles qui comprennent une saisie, par l'utilisateur, d'un code PIN ou d'un mot de passe ou d'une « passphrase » (phrase secrète utilisée pour une meilleure sécurité qu'un simple mot de passe).

Dans un mode de réalisation particulier, qui sera décrit par la suite, la solution de l'invention met en œuvre deux terminaux Bluetooth, l'un qui initie le processus d'appairage et l'autre qui l'accepte, et ce simplement en connectant physiquement ces deux terminaux au travers d'une interface de connexion spécifique, permettant une connexion physique directe entre les deux terminaux, connexion qui est dépourvue de l'utilisation de câble (de type câble de connexion USB). En d'autres termes, chaque terminal (smartphone, terminal de paiement) est pourvu d'une interface de connexion physique spécifique directement accessible par contact entre les deux terminaux : il s'agit d'une interface de connexion externe surfacique : la connexion physique entre les deux terminaux est réalisée en appliquant les deux connecteurs externes surfaciques des deux terminaux l'un sur l'autre. Il n'est donc pas nécessaire, dans le cadre de la présente technique, de lier physiquement les deux terminaux par l'intermédiaire d'un câble de liaison, comme cela a pu être rencontré avec d'autres solution de connexion de l'art antérieur.

Cette solution de connexion a son importance dans le cadre de la présente technique, et ce afin de rendre l'opération de replacement d'un terminal par un autre totalement transparente, rapide et naturelle pour l'utilisateur.

Par la suite, il est fait respectivement référence à l'initiateur et à l'accepteur pour désigner respectivement ces terminaux.

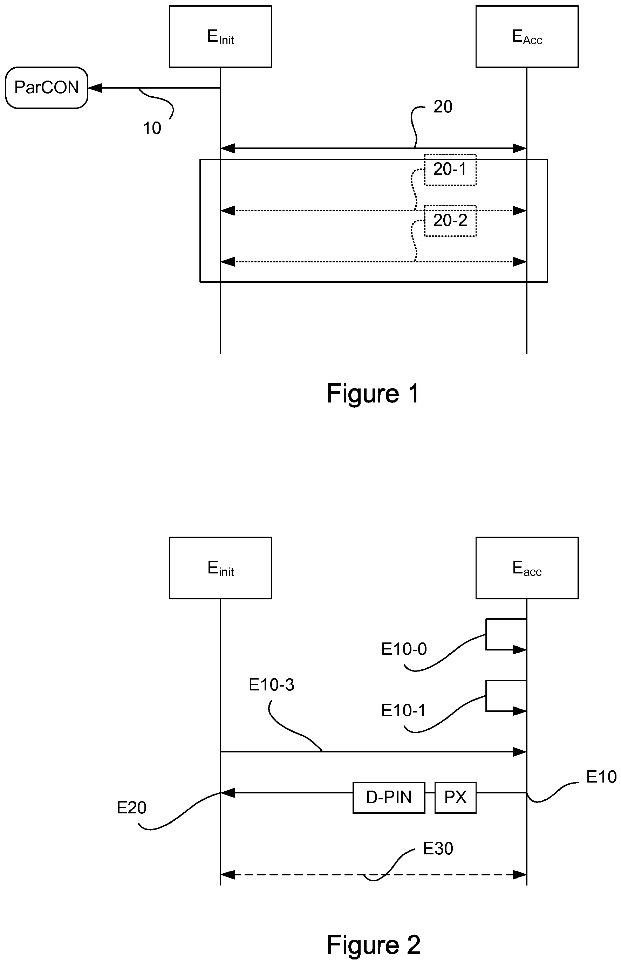

Le procédé de l'invention est décrit en relation avec la figure 1. Dans le cadre de l'invention, le terminal initiateur E_{Init} (par exemple un terminal de communication) dispose d'un connecteur externe surfacique (comme par exemple un connecteur de type « pogo » mâle), et le terminal accepteur E_{Acc} (par exemple un terminal de paiement) dispose d'un connecteur externe surfacique complémentaire.

Ces deux connecteurs surfaciques permettent de connecter les deux terminaux entre eux, de sorte à ce qu'une connexion de type connexion USB soit créée entre les deux terminaux par simple contact. Comme cela est explicité par la suite, une fois les deux terminaux physiquement connectés, une phase d'appairage est mise en œuvre. Comme décrit en relation avec un mode de réalisation spécifique de l'invention, quand le terminal de communication (terminal initiateur) ne dispose pas nativement d'un connecteur externe surfacique, cette caractéristique est apportée par l'utilisation d'un boitier spécifique dans lequel le terminal initiateur est inséré.

Selon l'invention, le processus d'appairage s'effectue globalement en deux principales étapes pour l'utilisateur, ces étapes s'effectuant après que les deux terminaux ont été connectés par l'intermédiaire des deux connecteurs surfaciques :
- Le terminal initiateur E_{Init} détermine (10), éventuellement à l'aide de l'utilisateur, un paramètre de connexion, ParCON (le terminal initiateur peut également gérer la mise en service du terminal accepteur) ;
- Le terminal accepteur E_{Acc} et le terminal initiateur E_{Init} s'apparient (20) selon un schéma d'appairage dépendant du paramètre de connexion ParCON déterminé.

L'étape d'appairage (20) des deux terminaux est effectuée comme suit :
- lorsque le paramètre ParCON est représentatif d'un appairage restrictif, l'appairage est effectué (20-1) en mode « connexion physique permanente ».
- lorsque le paramètre ParCON est représentatif d'un appairage étendu, l'appairage est effectué (20-2) en mode « connexion physique temporaire ».

Le principe général est de profiter de la connexion filaire pour gérer la sélection automatique du terminal accepteur à appairer. Eventuellement, l'utilisateur peut paramétrer de ne pas autoriser un appairage automatique et ne gérer uniquement que la reconnexion avec un terminal erminauxaccepteur déjà apparié (si par exemple les dispositifs ne sont pas complètement interchangeable entre les utilisateurs, par exemple les vendeurs d'une surface de vente).

Ces deux modes de connexion si distinguent essentiellement par le degré de liberté autorisé pour la séparation physique des deux terminaux. Dans le mode « connexion physique permanente », les deux terminaux ne peuvent fonctionner ensemble que s'ils sont physiquement connectés par l'intermédiaire de leurs connecteurs externes surfaciques. Si l'utilisateur (ou un autre utilisateur) sépare les deux terminaux, il n'est alors plus possible d'effectuer des échanges de données entre ces deux terminaux. Ce mode d'appairage permet de garantir une certaine sécurité dans l'interaction entre les deux terminaux, et plus particulièrement, permet de garantir une certaine sécurité dans la surface de vente. Dans le mode « connexion physique temporaire », l'appairage est effectué lorsque les deux terminaux sont physiquement connectés, par l'intermédiaire de leur liaison physique, mais l'appairage est maintenu lorsque les deux terminaux sont séparés. Ce mode privilégie la flexibilité, en autorisant l'utilisateur à séparer physiquement les terminaux pour les besoins de sa fonction. Par exemple, si un acheteur souhaite régler ses achats par carte bancaire, ce deuxième mode d'appairage permet à l'utilisateur de séparer les deux terminaux, pour donner le terminal de paiement à l'acheteur, le temps que celui-ci effectue les saisies nécessaires à l'achat (saisie du code PIN de la carte bancaire par exemple).

La procédure d'appairage étendu est la suivante (figure 2) :
- le terminal accepteur E_{Acc}, transmet E10, à l'aide de la connexion physique une donnée représentative du code PIN (D-PIN) ; en complément, d'autres paramètres (PX) peuvent également être transmis (adresse du terminal accepteur par exemple, cet aspect est détaillé par la suite)
- le terminal initiateur E_{Init} reçoit E20, à l'aide de la connexion physique, les données représentatives du code PIN. Lorsque d'autres paramètres sont utilisés (adresse du terminal accepteur par exemple, cette adresse est également acquise).
- l'appairage est réalisé à l'aide de la connexion sans fil (WiFi, Bluetooth) : bien que physiquement connectés, les deux terminaux utilisent la connexion sans fil pour finaliser l'appairage.

Il n'y a donc aucune saisie manuelle de l'utilisateur, ce qui simplifie le processus et évite les erreurs.

Le mécanisme d'appairage standard avec authentification est alors initié 30 et les deux terminaux sont connectés en quelques secondes (dépendant de l'environnement radio).

Le code PIN est généré E10-1 de manière aléatoire sur le terminal accepteur et est composé du maximum de caractère possible, ce qui assure un niveau de sécurité élevé sur la liaison entre les deux terminaux. Dans le cas d'une application utilisant la technologie Bluetooth par exemple, le code PIN comprend 16 caractères.

De plus le code PIN est généré de manière asynchrone, antérieurement ou postérieurement à la décision E10-0 de l'appairage du terminal initiateur E_{Init}, avec le terminal accepteur E_{Acc} et n'est donc pas stocké en mémoire non volatile dans le terminal accepteur E_{Acc}. La décision E10-0 est prise lors de la décision d'appairage des deux terminaux, par exemple au moment de la connexion physique des deux terminaux. Le code PIN est aléatoire et volatile.

Préalablement à l'appairage, une commande d'éffacement de la liste d'appairage est transmise (E10-3) par le termuinal initiateur au terminal accepteur (cette commande peut également prendre la forme d'une commande de rotation : c'est-à-dire une commande d'éffacement du dernier résultat de la liste d'appairage, le plus ancien, au profit de la création du nouvel appairage - avec le nouveau terminal initiateur). De son côté, le terminal initiateur peut également supprimer toute ou partie des entrées de sa propre liste d'appairage.

Lorsque deux terminaux sont déjà appariés, on peut également établir un nouvel appairage avec un nouveau code PIN aléatoire, ce qui permet de modifier les clés de chiffrement de manière périodique et permet donc d'augmenter encore la sécurité de ce lien. Au dela du « renouvellement » de l'appairage entre les deux terminaux, on peut également effectuer un transfert par le lien physique de certificats qui peuvent servir à chiffrer les données (au dessus de la sécurité intrinsèque à la transmission USB et/ou san fil). Ces certificats pourraient être spécifique à une session, c'est-à-dire une session correspondant à une période entre deux appairage à des terminaux différents. Auquel cas, la modification de la liste d'appairage (tant celle présente sur le terminal accepteur que celle présente sur le terminal initiateur) peut s'accompagner d'une modifications d'une liste de certificats correspondant.

Comme explicité préalablement, il est également possible de fournir au terminal initiateur E_{Init}, en sus du code PIN, d'autres données utiles pouvant être prises en compte pour augmenter le niveau de sécurisation de la méthode proposée. En fonction des modes de réalisation, ces données utiles peuvent être obligatoires pour pouvoir valider le processus d'appairage.

Parmi ces autres données utiles, on peut par exemple mentionner l'adresse (par exemple l'adresse Bluetooth) du dispositif accepteur E_{Acc}. En fonction des modes de réalisation de l'invention, la fourniture de ces données utiles peut être mise en œuvre différemment.

Dans un premier mode de réalisation, la fourniture des données utiles est séparée de la fourniture du code PIN. Cela signifie que, postérieurement à l'acquisition des données représentatives du code PIN par le terminal initiateur E_{Init}, une deuxième étape de réception a lieu. Cette séparation en deux étapes permet de s'assurer du respect de la procédure et donc offre une sécurisation supplémentaire.

Dans un deuxième mode de réalisation, la fourniture des données utiles est réalisée conjointement à la fourniture du code PIN. La différence entre ce deuxième mode de réalisation et le premier mode de réalisation se situant aux moments de l'acquisition des données (PIN, données utiles).

### 5.2. Description d'un mode de réalisation particulier

On décrit, dans ce mode de réalisation, la mise en œuvre de l'invention pour l'appairage de deux dispositifs par l'intermédiaire de la technologie USB/Bluetooth : il s'agit de réaliser un appairage d'un smartphone et d'un terminal de paiement. Dans ce mode de réalisation, le smartphone est le terminal initiateur et le terminal de paiement est le terminal accepteur.

Par rapport aux difficultés et aux problèmes préalablement exposés, l'appairage d'un terminal de paiement présente encore d'autres difficultés, parmi lesquelles l'obligation d'assurer un niveau de confidentialité absolu des données qui sont transmises au terminal.

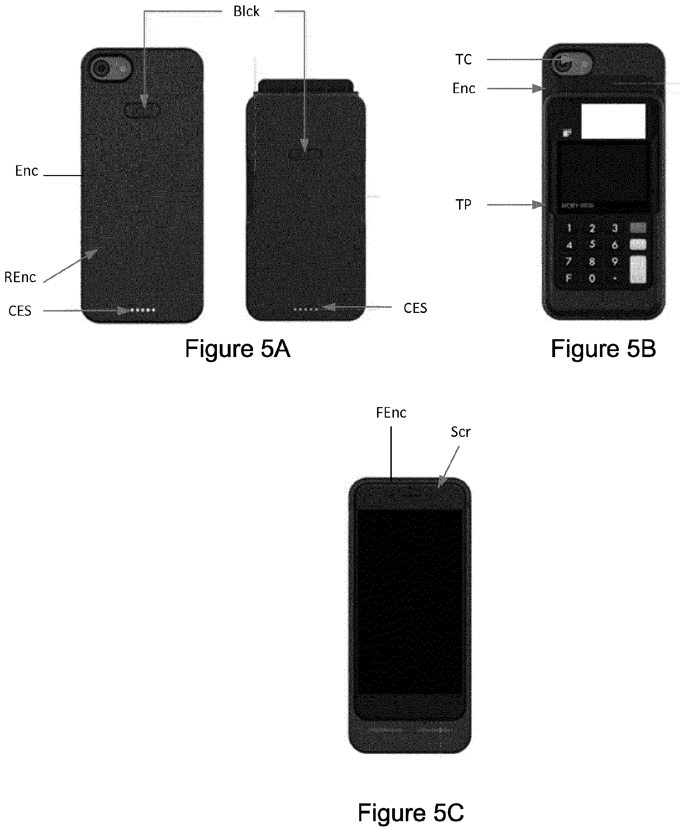

Dans ce mode de réalisation, présenté en relation avec les figures 5A à 5C, le terminal initiateur est un smartphone classique. Pour permettre une mise en œuvre de le procédé décrit, il est inséré dans un boitier (Enc, figue 5A, gauche). Ce boitier se présente globalement sous la forme d'un parallélépipède rectangle, disposant d'une face avant largement ajourée (FEnc, figure 5C), pour permettre de visualiser l'écran du smartphone (Scr) et une face arrière (REnc) comprenant le connecteur externe surfacique (CES). Ce boitier comprend également un dispositif de connexion (iCoN, non représenté) qui est relié au connecteur externe surfacique (CES). Il comprend également un dispositif de blocage (Blck) permettant de maintenir le terminal dans son logement. La figure 5A, droite, présente le dos d'un terminal de paiement, lui-même inséré dans un boitier. Il est bien entendu que compte tenu de la multiplicité des smartphones disponibles et de leurs formats, un boitier de la présente technique est spécifiquement destiné à recevoir un modèle de smartphone unique. Quoi qu'il en soit, le smartphone est placé dans ce boitier, lequel comprend en sa partie inférieure, un module de connexion (iCoN), destiné à se connecter au connecteur USB du smartphone. Ce module de connexion comprend des circuits électroniques et notamment des pistes qui permettent globalement de relier le connecteur USB vers le connecteur surfacique externe qui est situé au dos du boitier (et par voie de conséquence au dos du smartphone lorsque le smartphone est lui-même inséré dans le boitier). Le boitier comprend en outre au moins une surface dite magnétique (par abus de langage) : il s'agit d'une ou plusieurs plaques internes, par exemple des plaques métalliques ou des aimants plats, qui sont moulés dans le boitiers au niveau du dos de celui-ci (face arrière), et qui permettent une solidarisation magnétique avec le terminal de paiement (qui comprend également sur son dos (face arrière) un ou plusieurs surfaces magnétiques, de sorte que les connecteurs externes surfaciques puissent entrer parfaitement en contact lorsque le terminal de paiement est physiquement apparié avec le boitier (et donc le terminal de communication inséré dans le boitier). Idéalement, pour permettre un positionnement optimisé (i.e. que les deux connecteurs surfaciques soient correctement positionnés les uns par rapport aux autres, il peut être prévu des aimants avec des polarités inversées tant sur le boitier du terminal de communication que sur le terminal de paiement : cela évite par exemple de pouvoir plaquer le terminal de paiement sur le boitier du terminal de communication en étant à l'envers. Les polarités inversées des aimants permettent d'éviter ces problèmes de positionnement. La figure 5B présente la face avant (FEnc) du boitier du terminal de communication est visible, tout comme l'écran du terminal de communication.

Le module de connexion (iCoN) situé dans le boitier possède plusieurs fonctions. La première d'entre elles est de permettre la connexion du smartphone (terminal initiateur) via une interface de type USB (micro USB, USB type C, etc.). La deuxième est de permettre une alimentation électrique du terminal accepteur (le terminal de paiement par exemple), lequel est alimenté en drainant du courant à partir du terminal initiateur (le smartphone). La troisième est de mettre sous tension le terminal accepteur lors de la connexion (c'est-à-dire lorsque les deux connecteurs surfaciques externes sont mis en contact).

Dans un mode de réalisation, les deux connecteurs surfaciques externes sont des connecteurs USB : le connecteur surfacique externe du boitier du smartphone est un connecteur USB déporté, tout comme le connecteur surfacique externe du terminal accepteur. Lorsque les deux connecteurs sont assemblés (attachés) en apposant le terminal accepteur sur le boitier du terminal initiateur, une connexion de type USB est alors initiée. Cette connexion USB permet notamment de mettre en œuvre les fonctions précédemment présentées. Plus particulièrement, lorsque le terminal initiateur est inséré dans le boitier qui comprend le module de connexion (iCoN) et/ou que les deux connecteurs sont assemblés (attachés), le procédé suivant est mis en œuvre :
- une application d'appairage (lancée sur le terminal initiateur en tâche de fond ou en tâche principale) détecte la connexion du terminal initiateur au module de connexion et déclenche le démarrage de celui-ci ;
- à l'aide du module de connexion (iCoN), le terminal accepteur est détecté et démarré (s'il ne l'est pas déjà) ;
- un test est réalisé pour savoir si les deux terminaux sont déjà (ont déjà été) appariés (appairage réalisé précédemment, lors d'une précédente mise en œuvre de la Procédé d'appairage) par l'intermédiaire du protocole Bluetooth ;
- si le test est positif, l'appairage est confirmé ;
- si le test est négatif, l'application du dispositif initiateur effectue un appairage, selon le procédé général présenté précédemment (connexion physique temporaire ou connexion physique permanente, notamment comprenant la modification ou l'effacement de la liste d'appairage et la coupure de toute connexion du terminal de paiement avec un autre terminal de communication - avec lequel il a été précédemment accouplé).

Dans ces modes de réalisation, l'obtention du paramètre de connexion (permanente, temporaire) peut être automatique ou être réalisée en requérant, auprès de l'utilisateur, une réponse à une requête d'appairage. Plus particulièrement, l'application d'appairage peut demander à l'utilisateur s'il souhaite réaliser un appairage bluetooth. Si l'utilisateur répond « oui » à cette question, un appairage est effectué selon la procédure de la figure 1 (appairage bluetooth OOB via la connexion USB établie par les connecteurs surfaciques externes). Si l'utilisateur répond « non » à cette question, un appairage de type USB est réalisé (les données échangées entre le terminal accepteur et le terminal initiateur sont alors exclusivement échangées par l'intermédiaire du module de connexion (iCoN) et les connecteurs surfaciques externes des deux terminaux.

Dans le premier cas de figure, l'utilisateur peut détacher le terminal initiateur tout en maintenant la connexion Bluetooth entre les deux terminaux. Dans le deuxième cas de figure, en cas de déconnexion des deux terminaux (les deux terminaux sont physiquement détachés), l'application d'appairage affiche alors un message de reconnexion à l'utilisateur.

Lorsque la connexion est automatique, le paramètre d'appairage est directement disponible au sein du terminal de communication, soit par l'intermédiaire de l'application de connexion, soit dans une mémoire du terminal de communication, mémoire accessible par l'application de connexion.

D'autres caractéristiques spécifiques de la méthode peuvent également être détaillées, comme par exemple :
- la caractéristique selon laquelle la mise en contact physique des deux terminaux *(Terminal initiateur*/*Terminal accepteur),* déclenche le démarrage du terminal accepteur à l'initiative du terminal initiateur: le composant de connexion *(iCoN)* dispose de la capacité de transmettre un message de réveil au terminal accepteur afin de réveiller celui-ci lorsqu'il se trouve par exemple en état de veille ou éteint ; cette caractéristiques est de nature à faciliter l'interaction du terminal accepteur avec le terminal initiateur, sans intervention de l'utilisateur.
- la caractéristique selon laquelle le terminal initiateur récupère les identifiants du terminal accepteur, l'information de connexion ou non du terminal accepteur via une connexion existante (appelée, *lien#1,* c'est-à-dire la connexion effectuée par l'intermédiaire des connecteurs surfaciques filaire ou très courte portée) ;
   *et en fonction d'un paramétrage préexistant :*
   - le terminal initiateur transmet par le lien#1 une requête de stopper l'éventuelle connexion existante sur un *lien#2* (de même nature que le *lien#1*) du terminal accepteur avec un autre terminal initiateur (pour raison sécuritaire, un terminal accepteur, tel qu'un terminal de paiement, n'autorise qu'une seule connexion simultanée) ;
   - le terminal initiateur déclenche un phase de (re)connexion (lorsque l'appairage est déjà en place, car il a déjà été effectué précédemment) ;
   - le terminal initiateur transmet par le lien#1 uen requête d'effacement de la liste d'appairage du terminal initiateur (pour forcer une unicité d'appairage et empêcher qu'un terminal accepteur (ayant déjà été apparié) volé puisse se connecter.
- la caractéristique selon laquelle on réalise une transition automatique d'un mode de fonctionnement à un autre : La méthode procure une gestion simultanée (ou pas) de la connexion filaire & non filaire (bluetooth) avec un basculement automatique de l'une à l'autre en fonction de critères de basculement paramétrables; cette manière de gérer la connexion et le fonctionnement des deux terminaux l'un avec l'autre permet d'apporter de la souplesse à l'utilisateur pour la mise en œuvre quotidienne de l'appairage ; par ailleurs, grâce à la technique de l'invention, il est possible de maintenir (ou pas) la seconde connexion lorsque la première est active ;
- la caractéristique selon laquelle on effectue une gestion sécuritaire : la méthode comprend une gestion d'un timeout pour forcer à une connexion physique (*lien#1*) : par exemple toutes les 5 minuntes pour maintenir une connexion/ou même appairage (effacement automatique de la liste d'appairage en cas de déconnexion physique pendant un temps excédant le temps prédéterminé) sur la connexion sans fil (par exemple bluetooth) ; en complément, en cas de déconnexion prolongée (selon un temps défini dans un deuxième paramètre), un mécanisme de blocage automatique peut être mis en œuvre (blocage complet du terminal accepteur) ;
- la caractéristique selon laquelle l'appairage est automatiquement réalisé et qu'une bascule est réalisée automatiquement d'une connexion filaire à une connexion sans fil (Bluetooth) dynamiquement sans intervention de l'utilisateur.

### 5.3. Autres caractéristiques et avantages

L'invention a été décrite dans un mode de réalisation particulier. Il est bien entendu que l'invention ne se limite nullement à ce mode de réalisation. L'invention porte également sur les terminaux qui sont employés pour permettre l'appairage tel qu'il a été préalablement décrit. Plus particulièrement, l'invention se rapporte à un terminal accepteur. Le terminal accepteur comprend, selon l'invention : des moyens de génération d'un code d'appairage en réponse à cette décision d'appairage, des moyens de transmission, sous la forme d'une donnée, du code d'appairage. Ces moyens de transmission peuvent, comme cela a été indiqué, consister en une imprimante, un écran ou un moyen de transmission sonore.

L'ensemble de ces moyens sont pilotés par un programme d'ordinateur spécifiquement adapté, en fonction d'un protocole d'appairage initial, pour générer un code d'appairage, le transformer en une donnée et restituer cette donnée. Le programme d'ordinateur comprend en outre une phase de suspension de l'appairage tant que la procédure d'appairage n'a pas été complétée au niveau du terminal initiateur.

L'invention se rapporte également à un terminal initiateur. Le terminal initiateur comprend, selon l'invention :des moyens d'obtention de donnée d'un code d'appairage en réponse à cette décision d'appairage, des moyens d'appairage de la donnée acquis délivrant un code d'appairage ou d'autres données utiles en fonction de la donnée et de son type. Ces moyens d'obtention peuvent, comme cela a été indiqué, consister en un capteur optique, une caméra, un micro.

L'ensemble de ces moyens sont pilotés par un programme d'ordinateur spécifiquement adapté, en fonction d'un protocole d'appairage initial, pour obtenir un ou plusieurs données, le décoder en un code d'appairage et mettre en œuvre l'appairage subséquent. Le programme d'ordinateur comprend en outre une phase de suspension de l'appairage tant que la procédure d'appairage n'a pas été complétée au niveau du terminal accepteur.

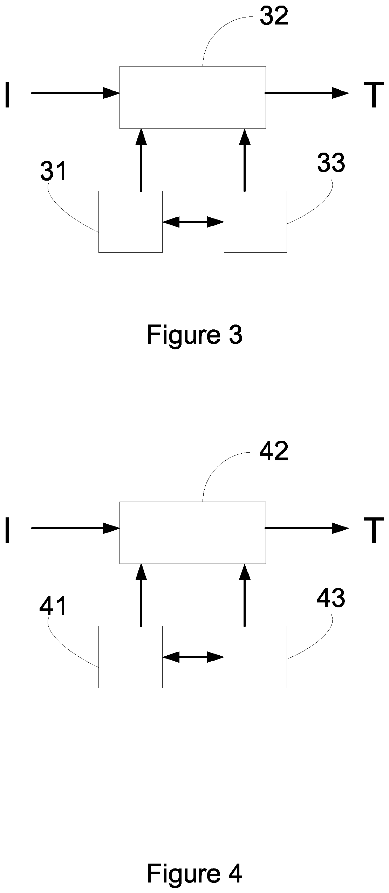

On présente, en relation avec la figure 3, un mode de réalisation d'un terminal accepteur selon l'invention.

Un tel terminal accepteur comprend une mémoire 31 constituée d'une mémoire tampon, une unité de traitement 32, équipée par exemple d'un microprocesseur P, et pilotée par le programme d'ordinateur 33, mettant en œuvre le procédé de modification selon l'invention.

À l'initialisation, les instructions de code du programme d'ordinateur 33 sont par exemple chargées dans une mémoire RAM avant d'être exécutées par le processeur de l'unité de traitement 32. L'unité de traitement 32 reçoit en entrée au moins une information I, telle qu'une décision d'appairage. Le microprocesseur de l'unité de traitement 32 met en œuvre les étapes du procédé d'appairage décrit précédemment, selon les instructions du programme d'ordinateur 33, pour délivrer une information traitée T, telle que le ou les données nécessaires à l'appairage du terminal. Pour cela, le terminal comprend, outre la mémoire tampon 31, les moyens préalablement et notamment un connecteur surfacique externe apte à être apposé sur un connecteur surfacique externe complémentaire d'un terminal accepteur; des moyens de détermination d'un paramètre de connexion audit terminal accepteur; et des moyens d'appairage avec ledit terminal accepteur selon un mode d'appairage dépendant du paramètre de connexion déterminé. Ces moyens peuvent être directement intégrés au terminal initiateur ou adjoints à celui-ci par exemple par l'intermédiaire d'un boitier de connexion comprenant par exemple un module de connexion. Ces moyens sont pilotés par le microprocesseur de l'unité de traitement 32. Les composants et moyens décrits peuvent être des composants sécurisés, des composants de confiance ou des composants mixant les structures sécurisées et les structures non sécurisées.

On présente, en relation avec la figure 4, un mode de réalisation d'un terminal initiateur selon l'invention.

Un tel dispositif comprend une mémoire 41 constituée d'une mémoire tampon, une unité de traitement 42, équipée par exemple d'un microprocesseur P, et pilotée par le programme d'ordinateur 43, mettant en œuvre le procédé d'appairage selon l'invention.

À l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée au moins une information I, telle qu'une donnée en provenance d'un terminal accepteur. Le microprocesseur de l'unité de traitement 42 met en œuvre les étapes du procédé de modification décrit précédemment, selon les instructions du programme d'ordinateur 43, pour délivrer une information traitée T, telle que le code d'appairage. Pour cela, le dispositif comprend, outre la mémoire tampon 41, les moyens préalablement décrits, et notamment un connecteur surfacique externe apte à être apposé sur un connecteur surfacique externe complémentaire d'un terminal initiateur et des moyens d'appairage avec ledit terminal initiateur selon un mode d'appairage dépendant d'un paramètre de connexion déterminé par ledit terminal initiateur. Ces moyens peuvent être directement intégrés au terminal initiateur ou adjoints à celui-ci par exemple par l'intermédiaire d'un boitier de connexion comprenant par exemple un module de connexion. Ces moyens sont pilotés par le microprocesseur de l'unité de traitement 42. Les composants et moyens décrits peuvent être des composants sécurisés, des composants de confiance ou des composants mixant les structures sécurisées et les structures non sécurisées.

Comme cela a été parfaitement compris, le procédé d'appairage tel qu'il a été précédemment décrit comprend en fait un premier sous procédé d'appairage qui est mis en œuvre sur le terminal initiateur et un deuxième sous procédé d'appairage qui est mis en œuvre sur le terminal accepteur, ces deux procédés pouvant être mis en œuvre indépendamment l'un de l'autre.

## Revendications

1. Procédé d'appairage d'un premier terminal, dit terminal initiateur désirant transmettre et recevoir des données avec un deuxième terminal, dit terminal accepteur, ledit procédé étant **caractérisé en ce qu'**il comprend :
- une étape d'apposition d'un connecteur surfacique externe du terminal initiateur sur un connecteur surfacique externe complémentaire du terminal accepteur délivrant, audit terminal initiateur, une donnée de présence dudit terminal accepteur ;
- une étape de détermination, par ledit terminal initiateur, d'un paramètre de connexion ;
- une étape d'appairage dudit terminal initiateur avec ledit terminal accepteur selon un mode d'appairage dépendant du paramètre de connexion déterminé, le mode d'appairage appartenant au groupe comprenant :
- un mode de connexion physique permanent, dans lequel la connexion est exclusivement assurée par le connecteur surfacique externe du terminal initiateur connecté au connecteur surfacique externe complémentaire du terminal accepteur ;
- un mode de connexion physique temporaire, dans lequel seul l'appairage du terminal initiateur avec le terminal accepteur requiert une connexion entre le connecteur surfacique externe du terminal initiateur et le connecteur surfacique externe complémentaire du terminal accepteur.

2. Procédé d'appairage selon la revendication 1, **caractérisée en ce que** dans le mode de connexion physique temporaire, l'étape d'appairage comprend :
- une étape de génération d'un code d'appairage par le terminal accepteur ;
- une étape de transmission, sous la forme d'une première donnée, par l'intermédiaire de la connexion entre les connecteurs surfacique, dudit code d'appairage ;
- une étape de réception de la première donnée par ledit terminal initiateur ;
- une étape de finalisation de l'appairage à l'aide de la première donnée reçue, par le biais d'une interface de communication sans fil.

3. Procédé d'appairage selon la revendication 2, **caractérisé en ce que** l'interface de communication sans fil est une interface Bluetooth.

4. Procédé d'appairage selon la revendication 2, **caractérisé en ce que**, postérieurement à l'étape de réception de la première donnée par le terminal initiateur, le procédé comprend une étape de suppression, au d'une liste de terminaux accepteurs précédemment appariés audit terminal initiateur.

5. Procédé selon la revendication 1, **caractérisé en ce que** l'étape d'apposition du connecteur surfacique externe du terminal initiateur sur le connecteur surfacique externe complémentaire du terminal accepteur créée une connexion de type USB entre le terminal initiateur et le terminal accepteur ;

6. Procédé d'appairage selon la revendication 1 à 5, **caractérisé en ce que** ledit terminal initiateur est un smartphone et **en ce que** ledit terminal accepteur est un terminal de paiement.

7. Terminal initiateur du type comprenant un processeur de traitement et une mémoire **caractérisé en ce qu'**il comprend :
- un connecteur surfacique externe apte à être apposé sur un connecteur surfacique externe complémentaire d'un terminal accepteur ;
- des moyens de détermination d'un paramètre de connexion audit terminal accepteur ;
- des moyens d'appairage avec ledit terminal accepteur selon un mode d'appairage dépendant du paramètre de connexion déterminé, le mode d'appairage appartenant au groupe comprenant :
- un mode de connexion physique permanent, dans lequel la connexion est exclusivement assurée par le connecteur surfacique externe du terminal initiateur connecté au connecteur surfacique externe complémentaire du terminal accepteur ;
- un mode de connexion physique temporaire, dans lequel seul l'appairage du terminal initiateur avec le terminal accepteur requiert une connexion entre le connecteur surfacique externe du terminal initiateur et le connecteur surfacique externe complémentaire du terminal accepteur.

8. Terminal accepteur du type comprenant un processeur de traitement et une mémoire, **caractérisé en ce qu'**il comprend :
- un connecteur surfacique externe apte à être apposé sur un connecteur surfacique externe complémentaire d'un terminal initiateur ;
- des moyens d'appairage avec ledit terminal initiateur selon un mode d'appairage dépendant d'un paramètre de connexion déterminé par ledit terminal initiateur, le mode d'appairage appartenant au groupe comprenant :
- un mode de connexion physique permanent, dans lequel la connexion est exclusivement assurée par le connecteur surfacique externe du terminal initiateur connecté au connecteur surfacique externe complémentaire du terminal accepteur ;
- un mode de connexion physique temporaire, dans lequel seul l'appairage du terminal initiateur avec le terminal accepteur requiert une connexion entre le connecteur surfacique externe du terminal initiateur et le connecteur surfacique externe complémentaire du terminal accepteur.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé d'appairage selon la revendication 1 à 6, lorsqu'il est exécuté par un processeur.

## Patentansprüche

1. Verfahren des Pairings eines ersten Endgeräts, das Initiator-Endgerät genannt wird, das Daten senden und empfangen möchte, mit einem zweiten Endgerät, das Akzeptor-Endgerät genannt wird, wobei das Verfahren **dadurch gekennzeichnet ist, dass** es aufweist:
- einen Schritt des Anbringens eines externen Oberflächenverbinders des Initiator-Endgeräts auf einem komplementären externen Oberflächenverbinder des Akzeptor-Endgeräts, der Anwesenheitsdaten des Akzeptor-Endgeräts an das Initiator-Endgerät bereitstellt;
- einen Schritt des Bestimmens eines Verbindungsparameters durch das Initiator-Endgerät;
- einen Schritt des Pairings des Initiator-Endgeräts mit dem Akzeptor-Endgerät nach einem Pairing-Modus, der von dem bestimmten Verbindungsparameter abhängt, wobei der Pairing-Modus zu der Gruppe gehört, umfassend:
- einen permanenten physischen Verbindungsmodus, wobei die Verbindung ausschließlich von dem externen Oberflächenverbinder des Initiator-Endgeräts gewährleistet wird, der mit dem komplementären externen Oberflächenverbinder des Akzeptor-Endgeräts verbunden wird;
- einen temporären physischen Verbindungsmodus, wobei nur das Pairing des Initiator-Endgeräts mit dem Akzeptor-Endgerät eine Verbindung zwischen dem externen Oberflächenverbinder des Initiator-Endgeräts und dem komplementären externen Oberflächenverbinder des Akzeptor-Endgeräts erfordert.

2. Verfahren des Pairings nach Anspruch 1, **dadurch gekennzeichnet, dass** bei dem temporären physischen Verbindungsmodus der Schritt des Pairings aufweist:
- einen Schritt des Generierens eines Pairing-Codes durch das Akzeptor-Endgerät;
- einen Schritt des Übertragens des Pairing-Codes in Form von einer ersten Dateneinheit über die Verbindung zwischen den Oberflächenverbindern;
- einen Schritt des Empfangens der ersten Dateneinheit durch das Initiator-Endgerät;
- einen Schritt des Beendens des Pairings mit Hilfe von der ersten empfangenen Dateneinheit über eine drahtlose Kommunikationsschnittstelle.

3. Verfahren des Pairings nach Anspruch 2, **dadurch gekennzeichnet, dass** diese drahtlose Kommunikationsschnittstelle eine Bluetooth-Schnittstelle ist.

4. Verfahren des Pairings nach Anspruch 2, **dadurch gekennzeichnet, dass** das Verfahren nach dem Schritt des Empfangens der ersten Dateneinheit durch das Initiator-Endgerät einen Schritt des Löschens einer Liste von Akzeptor-Endgeräten aufweist, die zuvor mit dem Initiator-Anschluss gepaired werden.

5. Verfahren nach Anspruch 1, **dadurch gekennzeichnet, dass** der Schritt des Anbringens des externen Oberflächenverbinders des Initiator-Endgeräts auf dem komplementären externen Oberflächenverbinder des Akzeptor-Endgeräts eine Verbindung des Typs der USB-Verbindung zwischen dem Initiator-Endgerät und dem Akzeptor-Endgerät erstellt.

6. Verfahren des Pairings nach Anspruch 1 bis 5, **dadurch gekennzeichnet, dass** das Initiator-Endgerät ein Smartphone ist und dadurch, dass das Akzeptor-Endgerät ein Zahlungsendgerät ist.

7. Initiator-Endgerät des Typs, umfassend einen Prozessor zur Verarbeitung und einen Speicher, **dadurch gekennzeichnet, dass** es aufweist:
- einen externen Oberflächenverbinder, der geeignet ist, auf einem komplementären externen Oberflächenverbinder eines Akzeptor-Endgeräts angebracht zu werden;
- Mittel zum Bestimmen eines Parameters des Verbindens mit dem Akzeptor-Endgerät;
- Mittel zum Pairing mit dem Akzeptor-Endgerät nach einem Pairing-Modus, der von dem bestimmten Verbindungsparameter abhängt, wobei der Pairing-Modus zu der Gruppe gehört, umfassend:
- einen permanenten physischen Verbindungsmodus, wobei die Verbindung ausschließlich von dem externen Oberflächenverbinder des Initiator-Endgeräts gewährleistet wird, der mit dem komplementären externen Oberflächenverbinder des Akzeptor-Endgeräts verbunden ist;
- einen temporären physischen Verbindungsmodus, wobei nur das Pairing des Initiator-Endgeräts mit dem Akzeptor-Endgerät eine Verbindung zwischen dem externen Oberflächenverbinder des Initiator-Endgeräts und dem komplementären externen Oberflächenverbinder des Akzeptor-Endgeräts erfordert.

8. Akzeptor-Endgerät des Typs, umfassend einen Prozessor zur Verarbeitung und einen Speicher, **dadurch gekennzeichnet, dass** es aufweist:
- einen externen Oberflächenverbinder, der geeignet ist, auf einem komplementären externen Oberflächenverbinder eines Initiator-Endgeräts angebracht zu werden;
- Mittel zum Pairing mit dem Initiator-Endgerät nach einem Pairing-Modus, der von einem Verbindungsparameter abhängt, der von dem Initiator-Endgerät bestimmt ist, wobei der Pairing-Modus zu der Gruppe gehört, umfassend:
- einen permanenten physischen Verbindungsmodus, wobei die Verbindung ausschließlich von dem externen Oberflächenverbinder des Initiator-Endgeräts gewährleistet wird, der mit dem komplementären externen Oberflächenverbinder des Akzeptor-Endgeräts verbunden ist;
- einen temporären physischen Verbindungsmodus, wobei nur das Pairing des Initiator-Endgeräts mit dem Akzeptor-Endgerät eine Verbindung zwischen dem externen Oberflächenverbinder des Initiator-Endgeräts und dem komplementären externen Oberflächenverbinder des Akzeptor-Endgeräts erfordert.

9. Computerprogrammprodukt, das von einem Kommunikationsnetz herunterladbar ist und/oder auf einem computerlesbaren Medium gespeichert und/oder von einem Mikroprozessor ausführbar ist, **dadurch gekennzeichnet, dass** es Programmcodebefehle für das Ausführen eines Verfahrens des Pairings nach Anspruch 1 bis 6 aufweist, wenn es von einem Prozessor ausgeführt wird.

## Claims

1. Method for pairing a first terminal, called an initiator terminal seeking to transmit and receive data, with a second terminal, called an acceptor terminal, said method being **characterized in that** it comprises:
- placing of an external surface connector of the initiator terminal on a complementary external surface connector of the acceptor terminal delivering a piece of data to said initiator terminal about the presence of said acceptor terminal;
- determining, by said initiator terminal, of a parameter of connection;
- pairing of said initiator terminal with said acceptor terminal according to a mode of pairing depending on the determined parameter of connection, the mode of pairing belonging to the group comprising:
- a mode of permanent physical connection in which the connection is exclusively provided by the external surface connector of the initiator terminal connected to the complementary external surface connector of the acceptor terminal;
- a mode of temporary physical connection in which only the pairing of the initiator terminal with the acceptor terminal requires a connection between the external surface connector of the initiator terminal and the complementary external surface connector of the acceptor terminal.

2. Method of pairing according to claim 1, **characterized in that**, in the temporary physical connection mode, the pairing step comprises:
- generating of a pairing code by the acceptor terminal;
- transmitting of said pairing code, in the form of a first piece of data, through the connection between the surface connectors;
- receiving of the first piece of data by said initiator terminal;
- finalizing of the pairing by means of the first piece of data received, through a wireless communications interface.

3. Method of pairing according to claim 2, **characterized in that** the wireless communications interface is a Bluetooth interface.

4. Method of pairing according to claim 2, **characterized in that**, subsequently to the step of reception of the first piece of data by the initiator terminal, the method comprises a step of elimination of a list of acceptor terminals previously paired with said initiator terminal.

5. Method according to claim 1, **characterized in** the step for placing the external surface connector of the initiator terminal on the complementary external surface connector of the acceptor terminal creates a USB type connection between the initiator terminal and the acceptor terminal.

6. Method of pairing according to claim 1 to 5, **characterized in that** said initiator terminal is a smartphone and said acceptor terminal is a payment terminal.

7. Initiator terminal of the type comprising a processor and a memory, **characterized in that** it comprises:
- an external surface connector capable of being placed on a complementary external surface connector of an acceptor terminal;
- means for determining a parameter of connection to said acceptor terminal;
- means of pairing with said acceptor terminal according to a mode of pairing that depends on the parameter of connection determined, the mode of pairing belonging to the group comprising:
- a mode of permanent physical connection in which the connection is exclusively provided by the external surface connector of the initiator terminal connected to the complementary external surface connector of the acceptor terminal;
- a mode of temporary physical connection in which only the pairing of the initiator terminal with the acceptor terminal requires a connection between the external surface connector of the initiator terminal and the complementary external surface connector of the acceptor terminal.

8. Acceptor terminal of the type comprising a processor and a memory, **characterized in that** it comprises:
- an external surface connector capable of being placed on a complementary external surface connector of an initiator terminal;
- means of pairing with said initiator terminal according to a mode of pairing that depends on a parameter of connection determined by said initiator terminal, the mode of pairing belonging to the group comprising:
- a mode of permanent physical connection in which the connection is exclusively provided by the external surface connector of the initiator terminal connected to the complementary external surface connector of the acceptor terminal;
- a mode of temporary physical connection in which only the pairing of the initiator terminal with the acceptor terminal requires a connection between the external surface connector of the initiator terminal and the complementary external surface connector of the acceptor terminal.

9. Computer program product downloadable from a communications network and/or stored on a computer-readable medium and/or executable by a microprocessor, **characterized in that** it comprises program code instructions for executing a method of pairing according to claim 1 to 6 when it is executed by a computer.
